# EUROPÄISCHE PATENTANMELDUNG

(11) **EP 1 693 287 A2**
(43) Veröffentlichungstag der Anmeldung: **23.08.2006**
(21) Anmeldenummer: 06001960.1
(22) Anmeldetag: 31.01.2006
(51) Int. Cl.: B62H 3/00, E04H 6/00

(54) **Einstellvorrichtung für Zweiräder**

(30) Priorität: 22.02.2005 DE 202005002804 U
(71) Anmelder: Schneider, Martin, 74080 Heilbronn (DE); Scheerer, Martin, 74078 Heilbronn-Biberach (DE)
(72) Erfinder: Schneider, Martin, 74080 Heilbronn (DE); Scheerer, Martin, 74078 Heilbronn-Biberach (DE)
(74) Vertreter: Clemens, Gerhard

(57) **Zusammenfassung**

Eine Einstellvorrichtung (10.1) als Diebstahlsicherung und Wetterschutz für Zweiräder (12), insbesondere Fahrräder, mit einer Gehäuseeinrichtung (20.1), ist dadurch gekennzeichnet, dass die Gehäuseeinrichtung (20.1) unterseitig offen ausgebildet ist, die Gehäuseeinrichtung (20.1) an einer Tragkonstruktion (30) zumindest auf zwei gegenüberliegenden Seiten zumindest bereichsweise beabstandet (A) zu einem Untergrund (40) befestigt beziehungsweise fixiert/befestigbar beziehungsweise fixierbar ist und die lichte Innengeometrie (H, L) Gehäuseeinrichtung (20.1) so ausgebildet ist, dass sie bei eingestelltem Zweirad (12) dessen Hinterrad- und Sattelbereich (14, 16) sichernd umgibt.

## Beschreibung

### TECHNISCHES GEBIET

Die vorliegende Erfindung betrifft eine Einstellvorrichtung als Diebstahlsicherung und Wetterschutz für Zweiräder, insbesondere Fahrräder, mit einer Gehäuseeinrichtung.

### STAND DER TECHNIK

Es sind Einstellvorrichtungen für Fahrräder bekannt, die als einfache Bügeleinheiten ausgebildet sind. Das Fahrrad wird mit seinem Vorderrad zwischen die Bügelschenkel eingeführt und mit einem Fahrradschloss gesichert. Diese Ausführungsart bietet keinerlei Wetterschutz. Gleichseitig ist der Diebstahlschutz nur unzureichend, da durch Lösen des Vorderrades aus der Vorderradgabel der wesentlich wertvollere Teil des Fahrrades relativ problemlos entwendet werden.

Aus der DE 199 59 097 ist eine verschließbare Kunststoffhaube (Garage) für Fahrräder bekannt. An einen feststehenden im Längsschnitt viertelkreisförmigen Gehäuseteil ist eine Öffnungsklappe angeschlossen, die nach dem Einführen eines Fahrrades unter Ausbildung einer im Längsschnitt viertelkreisförmigen Kontur geschlossen werden kann. Eine derartige Kunststoffhaupe ist als Diebstahlschutz nicht geeignet und benötigt eine relativ großen Raumbedarf.

In dem deutschen Gebrauchsmuster 84 08 501 ist ein Wetterschutzgehäuse für Zweiradfahrzeuge offenbart. Das Gehäuse wird durch einen rechteckigen Bodenrahmen und einen an der hinteren Schmalseite desselben über Scharniere hochklappbaren Gehäuses teils gebildet, wobei an der vorderen Schmalseite des Bodenrahmens ein Sicherheitsschloss zum Sichern des heruntergeklappten Gebäudeteils vorhanden ist. Das Wetterschutzgehäuse muss ein relativ großes Innenvolumen aufweisen, da das gesamte Fahrrad in diesem untergebracht werden muss. Ein derartig volumminöses Gehäuse besitzt ein hohes Gewicht und kann nur mit hohem Aufwand montiert werden.

In dem deutschen Gebrauchsmuster 94 18 014 ist eine Einrichtung zum Einstellen von Fahrrädern beschrieben, bei der an einem Gehäusegrundkörper ein bewegliches Gehäuseteil vorhanden ist, das nach dem Einführen eines Fahrrades nach außen geschwenkt werden kann, so dass das gesamte Fahrrad von einem Gehäusekörper umschlossen ist. Auch diese Einrichtung ist aufgrund der Umschließung des gesamten eingestellten Fahrrades sehr großvolumig. Darüberhinaus sind weitere Einstellvorrichtungen für Fahrräder bekannt, in denen ein Fahrrad als Gesamtgegenstand unter gebracht werden kann so beispielsweise in dem deutschen Gebrauchsmuster 94 18 015, dem deutschen Gebrauchsmuster 94 14 993, dem deutschen Gebrauchsmuster 94 19 920, der deutschen Offenlegungsschrift 41 05 817, der deutschen Offenlegungsschrift 37 32 522, der deutschen Offenlegungsschrift 42 35 158 und der deutschen Offenlegungsschrift 43 33 228.

In dem deutschen Gebrauchsmuster 200 09 564 ist eine Einstellvorrichtung beschrieben, bei dem das Fahrrad innerhalb der Einstellvorrichtung in vertikaler Position angeordnet ist.

In dem genannten Stand der Technik ist das Fahrrad als Gesamtkörper von einem Gehäuse umgeben. Daher sind diese Gehäuse relativ großvolumig, von ihrem Gewicht her relativ schwer und daher nur aufwendig zu montieren beziehungsweise zu demontieren.

Derartige Einstellvorrichtungen sind darüberhinaus aufwendig zu reinigen und werden gelegentlich, sofern sie im öffentlichen Raum aufgestellt sind, als Toilette oder Notunterkunft missbraucht, was insbesondere von den Städten und Kommunen nicht gern gesehen wird.

### DARSTELLUNG DER ERFINDUNG

Ausgehend von dem genannten Stand der Technik liegt der vorliegenden Erfindung die Aufgabe beziehungsweise technische Problem zugrunde, eine Einstellvorrichtung als Diebstahlsicherung und Wetterschutz für Zweiräder, insbesondere Fahrräder, anzugebende, die einen kompakten Aufbau gewährleistet, wirtschaftlich hergestellt werden kann, einfach montierbar und demontierbar ist, einfachere Reinigungsmöglichkeiten bietet, nicht zu Missbrauchshandlungen verleitet und einen zuverlässigen Witterungs- und Diebstahlschutz für wesentliche Teile des Zweirades bietet.

Die erfindungsgemäße Einstellvorrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Einstelleinrichtung der eingangs genannten Art zeichnet sich demgemäß dadurch aus, dass die Gehäuseeinrichtung unterseitig offen ausgebildet ist, die Gehäuseeinrichtung an einer Tragkonstruktion zumindest auf zwei gegenüberliegenden Seiten zumindest bereichsweise beabstandet zu einem Untergrund befestigt beziehungsweise fixiert/befestigbar beziehungsweise fixierbar ist und die lichte Innengeometrie Gehäuseeinrichtung so ausgebildet ist, dass sie bei eingestelltem Zweirad dessen Hinterrad- und Sattelbereich sichernd umgibt. Diese Merkmale wirken kombinatorisch miteinander.

Eine besonders bevorzugte Ausgestaltung zeichnet sich dadurch aus, dass die Gehäuseeinrichtung unterseitig umlaufend beabstandet zum Untergrund angeordnet ist. Durch diese konstruktive Ausgestaltung wird eine einfache Reinigung des Aufstellungsortes gewährleistet. Da keine Streben oder dergleichen Stützelemente vorhanden sind kann der Untergrund in einfacherer Art und Weise mit einem Besen oder mit einem Gebläse gereinigt werden.

Eine vorteilehafte Ausgestaltung zeichnet sich dadurch aus, dass die Gehäuseeinrichtung zusätzlich den Pedalbereich des Zweirades sichernd umgibt.

Eine besonders bevorzugte Weiterbildung zeichnet sich dadurch aus, dass die Gehäuseeinrichtung sichernd lösbar an der Tragkonstruktion angeschlossen/anschließbar ist. Dadurch kann die Gehäuseeinrichtung im nicht benötigten Zustand von autorisierten Montagepersonal entfernt und entsprechend eingelagert werden. Eine in der Handhabung beim sichernden Einstellen des Zweirades besonders bevorzugte Ausgestaltung zeichnet sich dadurch aus, dass die Gehäuseeinrichtung sichernd höhenverstellbar an der Tragvorrichtung angeschlossen/anschließbar ist. Alternativ kann auch ein sichernder drehbarer Anschluss der Gehäuseeinrichtung an der Tragkonstruktion vorgesehen sein.

Eine besonders bevorzugte Ausgestaltung, die insbesondere für Fahrradtouristen Vorteile bietet, zeichnet sich dadurch aus, dass die lichten Innenabmessungen der Gehäuseeinrichtung so ausgebildet sind, dass sie gegebenenfalls im hinteren Bereich des Zweirades angeordnete Zusatzelemente, wie beispielsweise Satteltaschen oder Kindesitze oder dergleichen sichernd umgibt. Dadurch können beispielsweise Fahrradtouristen ihr am Fahrrad befestigtes Reisegepäck zusammen mit dem Fahrrad problemlos sichern um anschließend beispielsweise eine Besichtigung von Sehenswürdigkeiten ohne Fahrrad vornehmen zu können.

Die Tragkonstruktion kann beispielsweise eine feststehende Wand sein. Es ist auch möglich, als Tragkonstruktion einen Rahmen oder zumindest einen Pfosten vorzusehen.

Eine besonders wirtschaftlich herstellbare, robuste und leicht zu montierende vorteilhafte Ausführungsvariante zeichnet sich dadurch aus, dass die Gehäuseeinrichtung eine linke und eine rechte Seitenwand und ein die beiden Seitenwände oberseitig verbindendes Dachflächenelement aufweist.

Das Dachflächenelement ist dabei bevorzugt so ausgebildet, dass es jeweils eine zu der jeweiligen Seitenwand geneigt abfallende Flanke aufweist. Dabei kann das Dachflächenelement eine konvexe Krümmung besitzen. Durch diese Bauform wird die Beschädigungsmöglichkeit oder oberseitige Verschmutzung aufgrund von Witterungseinflüssen oder aufgrund der relativ kleinvolumigen Geometrie ein Wandalismus (Missbrauch als WC) deutlich verringert.

Eine besonders bevorzugte Weiterbildung zeichnet sich dadurch aus, dass eine die Seitenwände stirnseitig verbindende Vorderwand mit einer nach unten offenen Ausnehmung vorhanden. Dadurch kann die entweder höhenverschiebbare oder drehbare Gehäuseeinrichtung problemlos über den relevanten Hinterrad- und Sattelbereich eingestellten Fahrzeuges gestülpt werden.

Die Vorderwand mit Ausnehmung kann alternativ durch zwei schwenkbare miteinander verschließbare Türflügel gebildet sein.

Es ist auch möglich, den vorderseitigen Verschluss des eingestellten Fahrrades durch ein anordenbares von der linken zur rechten Seitenwand verlaufendes, verschließbares Bügelelement zu realisieren.

Die Gehäuseeinrichtung kann beispielsweise auch aus Metall, Aluminium, Kunststoff, Holz, Betonwerkstoff bestehen.

Hinsichtlich einer besonders einfachen Handhabung einer verschiebbaren beziehungsweise schwenkbaren Gehäuseeinrichtung ist vorteilhaft, Betätigungselemente, insbesondere Griffhebel- oder Griffmulden vorzusehen.

Eine besonders bevorzugte Ausführungsform zeichnet sich dadurch aus, dass die Gehäuseeinrichtung zumindest eine Anschlusseinheit zum Anschließen einer Schlosseinheit zum sichernden Verbinden des Zweirades mit der Gehäuseeinrichtung aufweist. Dadurch kann die Sicherung des Zweirades oder eines Fahrrades innerhalb der Gehäuseeinrichtung durch ein übliches mobiles Fahrradschloss bewerkstelligt werden.

Eine bevorzugte Ausgestaltung zeichnet sich dadurch aus, dass die Gehäuseeinrichtung zumindest bereichsweise Info- oder Werbeflächen besitzt.

Die Gehäuseeinrichtung kann beispielsweise einstückig ausgebildet sein. Bei Verwendung von Kunststoffmaterial kann die Form als gezogenes, geblasenes oder gespritztes oder geschleudertes Kunststoffteil ausgebildet sein. Auch eine geschweißte Variante ist denkbar.

Alternativ kann die Einstellvorrichtung so ausgebildet sein, dass die Gehäuseeinrichtung als Moduleinheit aufgebaut ist und/oder als aus Modulelementen montierbare Einrichtung ausgebildet ist. Als Modulelemente können beispielsweise gekantete Blechelemente zum Einsatz kommen. Alternativ können als Rahmenelemente und Flächenelemente ausgebildete Modulelemente zum Einsatz kommen.

Eine besonders vorteilhafte Ausführungsvariante zeichnet sich dadurch aus, dass die Gehäuseeinrichtung Anschlusselemente zum Anschluss benachbarter Gehäusevorrichtungen aufweist, so dass eine modulare Anordnung mehrerer Gehäuseeinrichtungen möglich ist.

Eine vorteilhafte Weiterbildung zeichnet sich dadurch aus, dass, die Gehäuseeinrichtung in Längsrichtung teleskopierbar ausgebildet ist. Dadurch kann das Gehäuse im nicht benutzten Zustand auf ein relativ kleines Bauvolumen verkleinert werden.

Die erfindungsgemäße Einstellvorrichtung bietet eine kleinstmögliche Bauform zum universalen Schutz von Zweirädern unterschiedlicher Größe und deren Zubehörteilen wie beispielsweise Satteltaschen, Kindersitze oder dergleichen. Durch rückwärtiges Einparken und anschließendes Sichern der Gehäuseeinrichtung in ihrer Sicherheitsposition ist einerseits ein zuverlässiger Diebstahlschutz und andererseits ein Witterungsschutz gegeben. Die Bauform der Einstellvorrichtung kann kompakt gehalten werden, wobei Zweiräder mit unterschiedlicher in der Regel relativ weit ausladender Lenkerform problemlos eingestellt und gesichert werden können, da die Gehäuseeinrichtung in Sicherungsposition den Lenker des Zweirades nicht umhüllt.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1 und 2: schematische Seitenansicht und Vorderansicht einer Einstellvorrichtung mit einem eingestellten Fahrrad, deren Gehäuseeinrichtung den Hinterrad-, Sattel- und Pedalbereich des Fahrrades sichernd umgreift, in durchsichtiger Darstellung,
- Fig. 3, 4 und 5: schematische Seitenansicht, Vorderansicht und Draufsicht auf ein zweites Ausführungsbeispiel der Einstellvorrichtung, die gegenüber der Einstelleinrichtung gemäß den Fig. 1 und 2 eine größere Breite aufweist, in durchsichtiger Darstellung,
- Fig. 6: schematische Perspektivdarstellung einer Einstellvorrichtung mit einer quaderförmigen Gehäuseeinrichtung ohne Rückwand und einer Vorderwand mit einer nach unten offenen Ausnehmung,
- Fig. 7: schematische Perspektivdarstellung einer Einstellvorrichtung mit einer quaderförmigen Gehäuseeinrichtung mit Rückwand und einer Vorderwand mit einer nach unten offenen Ausnehmung,
- Fig. 8: schematische Perspektivdarstellung einer Einstellvorrichtung mit einem im Querschnitt U-förmigen Gehäuseeinrichtung, die vorderseitig mit einer Bügeleinheit verschließbar ist,
- Fig. 9: schematische Perspektivdarstellung einer Einstellvorrichtung mit einer Gehäuseeinrichtung bei der die Vorderwand durch zwei Vorderwand mit Ausnehmungen durch zwei schwenkbare Flügeltürelemente gebildet wird,
- Fig. 10: schematisierte Seitenansicht einer Einstellvorrichtung, die Höhen verstellbar an einer Tragkonstruktion angeschlossen ist,
- Fig. 11: schematisierte Seitenansicht einer Einstellvorrichtung, die um eine Drehachse schwenkbar an einer Tragkonstruktion angeordnet ist und
- Fig. 12: schematisierte Seitenansicht einer Einstellvorrichtung mit einer teleskopierbaren Gehäuseeinrichtung.

### WEGE ZUM AUSFÜHREN DER ERFINDUNG

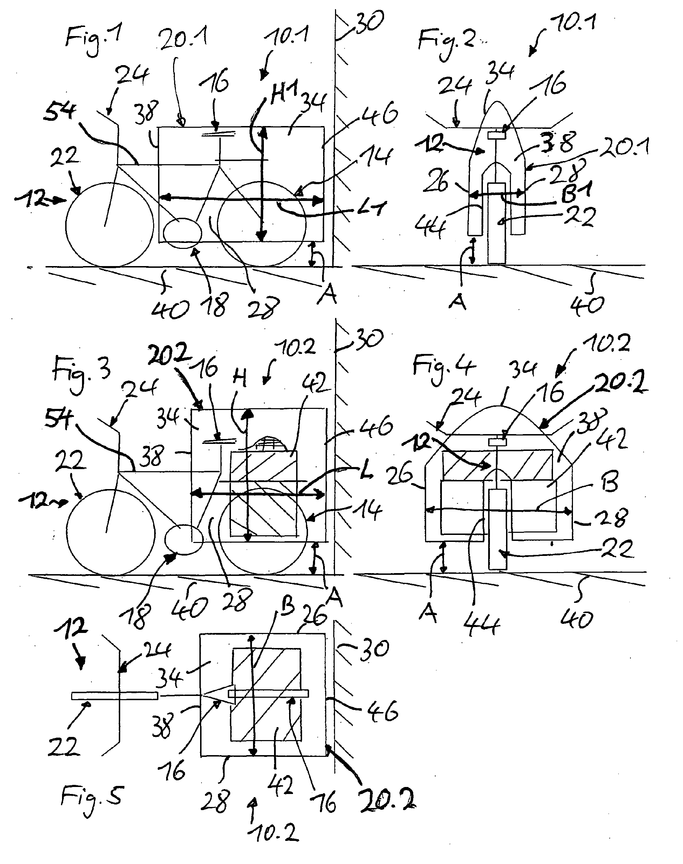

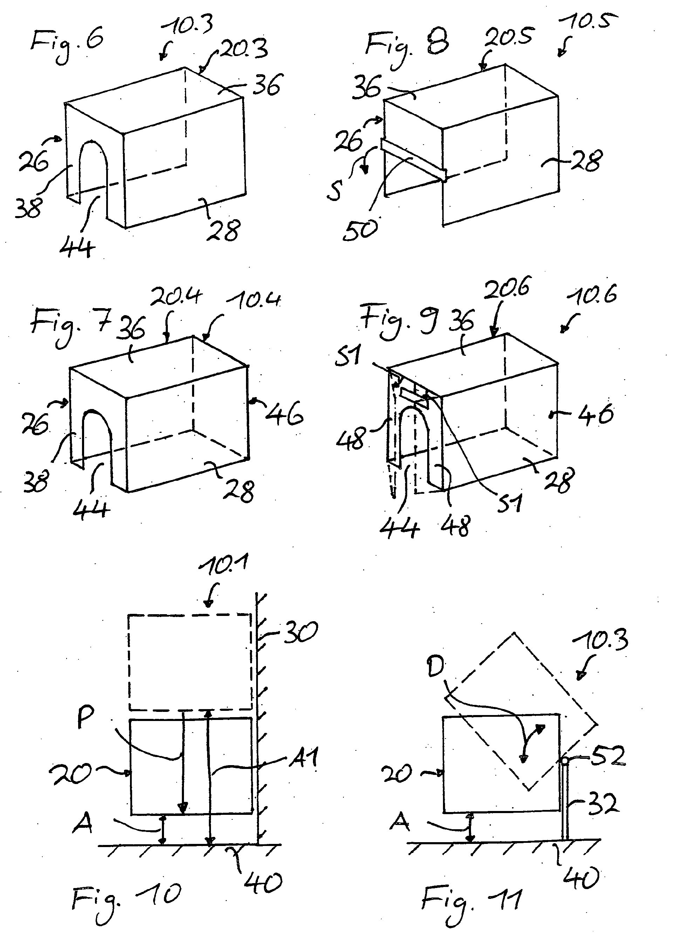

In den Fig. 1 und 2 ist ein erstes Ausführungsbeispiel einer Einstellvorrichtung 10.1 dargestellt, in die ein Fahrrad 12 eingestellt ist. Das Fahrrad 12 weist ein Hinterradbereich 14, einen Sattelbereich 16, einen Pedalbereich 18, einen Vorderradbereich 22, einen Lenkerbereich 24 und einen den Vorderradbereich 22 mit dem Hinterradbereich verbindenden Rahmen 54 auf.

Die Einstellvorrichtung 10.1 besitzt eine nach unten offene Gehäuseeinrichtung 20.1. Die Gehäuseeinrichtung 20.1 weist im Querschnitt eine glockenförmige Kontur auf mit einem linken Seitenwandelement 26, einem parallel beabstandet angeordneten rechten Seitenwandelement 28 und einem die beiden Seitenwände 26, 28 verbindenden Dachflächenelement 34 auf. Das Dachflächenelement 34 besitzt eine stark konvexe, im Ausführungsbeispiel parabelähnliche Krümmung, so dass sich zu den Seitenwänden 26, 28 geneigt nach unten fallende Flanken ausbilden. Im rückwärtigen Endbereich ist zwischen den Seitenwänden 26, 28 eine Rückwand 46 und im vorderen Bereich eine Vorderwand 38 mit einer mittig angeordneten, nach unten offenen Ausnehmung 44 vorhanden.

Die Gehäuseeinrichtung 20.1 bildet somit eine glockenförmige Struktur, die gemäß dem Ausführungsbeispiel in den Fig. 1 und 2 über den Hinterradbereich 14, den Sattelbereich 16 und den Pedalbereich 18 des Fahrrades 12 gestülpt werden kann. Die Breite B1, die Länge L1 und die Höhe H1 sind dabei so bemessen, dass die genannten Bereiche mit genügend Spielraum umfasst werden können.

Die Gehäuseeinrichtung 20.1 ist über in den Figuren nicht näher dargestellte Verbindungsmittel höhenverstellbar an einer ortfesten Tragkonstruktion 30 (hier: Wand) angeschlossen. Die lichten Innenmaße der Gehäuseeinrichtung 20.1 sind in Fig. 1 und 2 mit L1, H1 und B1 bezeichnet.

Die Höhenverstellbarkeit der Gehäuseeinrichtung 20.1 ist in Fig. 10 schematisch dargestellt. Zum Einstellen des Fahrrades 12 wird nun wie folgt vorgegangen. Die Gehäuseeinrichtung 20.1 befindet sich in ihrer oberen, in Fig. 10 gestrichelt dargestellten Position. Dabei ist der Abstand A1 der Unterseite der Gehäuseeinrichtung 20.1 zum Untergrund 40 so gewählt, dass das Fahrrad 12 in Rückwärtsrichtung unterhalb der Gehäuseeinrichtung 20.1 positioniert werden kann. Daran anschließend wird Gehäuseeinrichtung 20.1 in Pfeilrichtung P nach unter verschoben, wodurch der Hinterradbereich 14, der Sattelbereich 16 und der Pedalbereich 18 des Fahrrades 12 umfasst wird. Der Rahmen 54 verläuft in dieser Position durch die Ausnehmung 44 hindurch. In dieser unteren Position wird die Gehäuseeinrichtung 20.1 durch näher dargestellte Schlosseinrichtung oder Verriegelungseinrichtung gesichert, so dass ein Entfernen des eingestellten Fahrrades 12 aus der Gehäuseeinrichtung 20.1 nicht mehr möglich ist. In gesicherter Position befindet sich die Gehäuseeinrichtung 20.1 umlaufend im Abstand A zum Untergrund 40.

In den Fig. 3, 4 und 5 ist eine zweite Ausführungsvariante einer Einstellvorrichtung 10.2 mit einer Gehäuseeinrichtung 20.2 dargestellt, die prinzipiell den gleichen Aufbau aufweist wie die Gehäuseeinrichtung 20.1 gemäß den Fig. 1 und 2, jedoch mit dem Unterschied, dass die lichte Innenmaße L, B, H sich derart unterscheiden, dass bei dieser Ausführungsvariante ein Fahrrad 12 mit zusätzlich im hinteren Bereich vorhandenen Satteltaschen 42, die die Breite des Fahrrades 12 vergrößert, sichernd eingestellt werden kann.

In Fig. 7 ist schematisch ein drittes Ausführungsbeispiel einer Gehäuseeinrichtung 20.3 dargestellt, das ebenfalls eine linke und rechte Seitenwand 26, 28, eine Vorderwand 38 mit nach unten offener Ausnehmung 44 und ein Dachflächenelement 36 aufweist, wobei letzteres als ebenes Flächenelement ausgebildet ist. Eine Rückwand ist bei dieser Ausführungsvariante nicht vorhanden. Dadurch wird das Gewicht der Gehäuseeinrichtung 20.3 gegenüber dem oben beschriebenen Gehäuseeinrichtung 20.1, 20.2 weiter verringert. Als Tragkonstruktion ist bei dieser Ausführungsvariante eine festehende Wand vorgesehen.

Das in Fig. 7 dargestellte Ausführungsbeispiel entspricht im Wesentlichen den Ausführungsbeispielen gemäß Fig. 1 beziehungsweise 3, jedoch mit einem flachen Dachflächenelement 36.

Die Ausführungsvariante gemäß Fig. 8 entspricht im Wesentlichen der Ausführungsvariante gemäß Fig. 6, jedoch mit Unterschied, dass anstelle der Vorderwand 38 eine schwenkbare (Pfeil S) angeordnete Bügeleinheit 50 vorhanden ist, die über nicht näher dargestellte Schlosseinheiten verschließbar mit den Seitenwänden 26 beziehungsweise 28 ausgebildet ist.

Die in Fig. 9 dargestellte Ausführungsvariante entspricht im Wesentlichen der Ausführungsvariante gemäß Fig. 7, jedoch mit dem Unterschied, dass die Vorderwand mit Ausnehmung 44 durch zwei schwenkbare (Pfeile S1) an den Seitenwänden 26, 28 angeordnete Türflügel 48 gebildet wird, die über nicht näher dargestellte Schließelemente miteinander verschließbar sind.

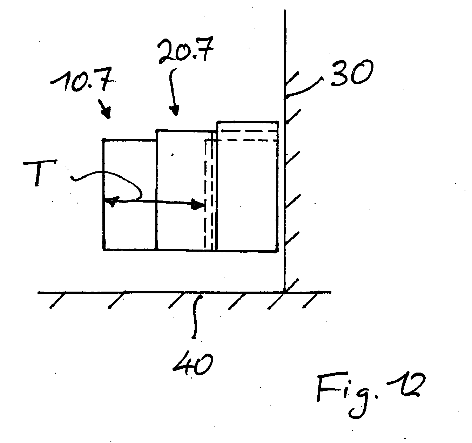

In Fig. 11 ist schematisch eine Ausführungsvariante dargestellt, bei der die Gehäuseeinrichtung 20 drehbar an einer als Pfosten oder Rahmen ausgebildeten Tragkonstruktion 32 angeschlossen ist. Bei dieser Ausführungsform wird die Gehäuseeinrichtung 20 nach dem rückwärtigen Einschieben des Fahrrades 12 durch Drehung (Pfeil D) durch Verschwenken um die eine Drehachse 52 über den hinteren Bereich des Fahrrades 12 gestülpt.

Die Ausführungsvarianten gemäß den Fig. 6 und 7 sind entweder höhenverstellbar (siehe Fig. 10) oder drehbar (siehe Fig. 11) an einer Tragkonstruktion 30, 32 befestigt. Die über das eingestellte Fahrrad gestülpte Position der Gehäuseeinrichtung 20 wird durch nicht näher dargestellte Schlosseinheiten oder sonstiger Sperreinheiten gesichert und kann lediglich von dem jeweiligen Benutzer wieder gelöst beziehungsweise entriegelt werden.

Die in den Fig. 8 und 9 dargestellten Ausführungsvarianten sind dazu geeignet, fest an einer Tragkonstruktion montiert zu werden. Eine Verschiebung beziehungsweise Schwenkung der Gehäuseeinrichtung 20 ist nicht erforderlich. Das Fahrrad wird rückseitig von der Vorderseite der Gehäuseeinrichtung 20 in die selbe eingeschoben und anschließend wird die Bügeleinheit 50 beziehungsweise die Türflügel 48 geschlossen und mit einem zusätzlichen Schloss in ihrer Schließstellung gesichert.

Fig. 12 zeigt eine Gehäuseeinrichtung 20.7 die in Längsrichtung (Pfeil T), das heißt in Einschieberichtung eines Zweirades teleskopierbar ausgebildet ist. Die Gehäuseeinrichtung 20.7 besteht im dargestellten Ausführungsbeispiel aus 3 Teleskopelementen. Dies ermöglicht eine platzsparende Anordnung im nicht benutzten Zustand (gestrichelte Darstellung in Fig. 12) einer Einstellvorrichtung 10.7.

## Patentansprüche

1. Einstellvorrichtung (10.1, 10.2, 10.3, 10.4,10.5, 10.6) als Diebstahlsicherung und Wetterschutz für Zweiräder (12), insbesondere Fahrräder, mit
- einer Gehäuseeinrichtung (20.1, 20.2, 20.3, 20.4, 20.5, 20.6),
- **dadurch gekennzeichnet, dass**
- die Gehäuseeinrichtung (20.1, 20.2, 20.3, 20.4, 20.5, 20.6) unterseitig offen ausgebildet ist,
- die Gehäuseeinrichtung (20.1, 20.2, 20.3, 20.4, 20.5, 20.6) an einer Tragkonstruktion (30, 32) zumindest auf zwei gegenüberliegenden Seiten zumindest bereichsweise beabstandet (A) zu einem Untergrund (40) befestigt beziehungsweise fixiert/befestigbar beziehungsweise fixierbar ist und
- die lichte Innengeometrie (B, H, L) Gehäuseeinrichtung (20.1, 20.2, 20.3, 20.4, 20.5, 20.6) so ausgebildet ist, dass sie bei eingestelltem Zweirad (12) dessen Hinterrad- und Sattelbereich (14,16) sichernd umgibt.

2. Einstellvorrichtung nach Anspruch 1,
- **dadurch gekennzeichnet, dass**
- die Gehäuseeinrichtung (20.1, 20.2, 20.3, 20.4, 20.5, 20.6) unterseitig umlaufend beabstandet (A) zum Untergrund (40) angeordnet ist.

3. Einstellvorrichtung nach Anspruch 1 oder 2,
- **dadurch gekennzeichnet, dass**
- die Gehäuseeinrichtung (20.1) zusätzlich den Pedalbereich (18) des Zweirades (12) sichernd umgibt.

4. Einstellvorrichtung nach einem oder mehreren der vorstehenden Ansprüche,
- **dadurch gekennzeichnet, dass**
- die Gehäuseeinrichtung (20.1, 20.2, 20.3, 20.4, 20.5, 20.6) sichernd lösbar an der Tragkonstruktion (30, 32) angeschlossen/anschließbar ist.

5. Einstellvorrichtung nach einem oder mehreren der Ansprüche 1 bis 4,
- **dadurch gekennzeichnet, dass**
- die Gehäuseeinrichtung (20.1, 20.2, 20.3, 20.4, 20.5, 20.6) sichernd höhenverstellbar (H) an der Tragvorrichtung (30) angeschlossen/anschließbar ist.

6. Einstellvorrichtung nach einem oder mehreren der Ansprüche 1 bis 4,
- **dadurch gekennzeichnet, dass**
- die Gehäuseeinrichtung (20.1, 20.2, 20.3, 20.4, 20.5, 20.6) sichernd drehbar (D) an der Tragkonstruktion (32) angeschlossen/anschließbar ist.

7. Einstellvorrichtung nach einem oder mehreren der vorstehenden Ansprüche,
- **dadurch gekennzeichnet, dass**
- die lichten Innenabmessungen (H, B) der Gehäuseeinrichtung (20.1, 20.2, 20.3, 20.4, 20.5, 20.6) so ausgebildet sind, dass sie gegebenenfalls im hinteren Bereich des Zweirades angeordnete Zusatzelemente, wie Satteltaschen (42), Kindersitze oder dergleichen sichernd umgibt.

8. Einstellvorrichtung nach einem oder mehreren der vorstehenden Ansprüche,
- **dadurch gekennzeichnet, dass**
- die Tragkonstruktion durch eine Wand (30), einen Rahmen oder zumindest einen Pfosten (32) gebildet wird.

9. Einstellvorrichtung nach einem oder mehreren der vorstehenden Ansprüche,
- **dadurch gekennzeichnet, dass**
- die Gehäuseeinrichtung (20.1, 20.2, 20.3, 20.4, 20.5, 20.6) eine linke und rechte Seitenwand (26, 28) und ein die beiden Seitenwände (26, 28) oberseitig verbindendes Dachflächenelement (34, 36) aufweist.

10. Einstellvorrichtung nach Anspruch 9,
- **dadurch gekennzeichnet, dass**
- das Dachflächenelement (34) jeweils eine zu der jeweiligen Seitenwand (26, 28) geneigt abfallende Flanke aufweist.

11. Einstellvorrichtung nach Anspruch 10,
- **dadurch gekennzeichnet, dass**
- das Dachflächenelement (34) eine konvexe Krümmung aufweist.

12. Einstellungsvorrichtung nach einem oder mehreren der Ansprüche 9 bis 11,
- **dadurch gekennzeichnet, dass**
- die Gehäuseeinrichtung (20.1, 20.2, 20.3, 20.4, 20.6) eine die Seitenwände (26, 28) stirnseitig verbindende Vorderwand (38) mit einer nach unten offenen Ausnehmung (44) aufweist.

13. Einstellvorrichtung nach einem oder mehreren der Ansprüche 9 bis 12,
- **dadurch gekennzeichnet, dass**
- die Gehäuseeinrichtung (20.1, 20.2, 20.4, 20.6) eine die Seitenwände (26, 28) stirnseitig verbindende Rückwand (46) aufweist.

14. Einstellvorrichtung nach Anspruch 12,
- **dadurch gekennzeichnet, dass**
- die Vorderwand (38) mit Ausnehmung (44) durch zwei schwenkbare, miteinander verschließbare Türflügel (48) gebildet wird.

15. Einstellvorrichtung nach einem oder mehreren der Ansprüche 9 bis 13,
- **dadurch gekennzeichnet, dass**
- ein vorderseitig von der linken zu der rechten Seitenwand (26, 28) verlaufendes, verschließbares Bügelelement (50) vorhanden ist.

16. Einstellvorrichtung nach einem oder mehreren der Ansprüche 9 bis 15,
- **dadurch gekennzeichnet, dass**
- die Gehäuseeinrichtung (20.1, 20.2, 20.3, 20.4, 20.5, 20.6) aus Metall, Kunststoff, Holz, Betonwerkstoff zumindest teilweise besteht.

17. Einstellvorrichtung nach Anspruch 4 oder 5,
- **dadurch gekennzeichnet, dass**
- die Gehäuseeinrichtung Betätigungselemente insbesondere Griffhebel oder -mulden, zum Verschieben beziehungsweise Verschwenken der Gehäuseeinrichtung aufweist.

18. Einstellvorrichtung nach einem oder mehreren der vorstehenden Ansprüche,
- **dadurch gekennzeichnet, dass**
- die Gehäuseeinrichtung (20.1, 20.2, 20.3, 20.4, 20.5, 20.6) zumindest eine Anschlusseinheit zum Anschließen einer Schlosseinheit zum sichernden Verbinden des Zweirades (12) mit der Gehäuseeinrichtung (20.1, 20.2, 20.3, 20.4, 20.5, 20.6) aufweist.

19. Einstellvorrichtung nach einem oder mehreren der vorstehenden Ansprüche,
- **dadurch gekennzeichnet, dass**
- an der Gehäuseeinrichtung (20.1, 20.2, 20.3, 20.4, 20.5, 20.6) Beleuchtungsmittel vorhanden sind.

20. Einstellvorrichtung nach einem oder mehreren der vorstehenden Ansprüche,
- **dadurch gekennzeichnet, dass**
- die Gehäuseeinrichtung (20.1, 20.2, 20.3, 20.4, 20.5, 20.6) zumindest bereichsweise Info- oder Werbeflächen aufweist.

21. Einstellvorrichtung nach einem oder mehreren der vorstehenden Ansprüche,
- **dadurch gekennzeichnet, dass**
- die Gehäuseeinrichtung (20.1, 20.2, 20.3, 20.4, 20.5, 20.6) einstückig ausgebildet ist.

22. Einstellvorrichtung nach einem oder mehreren der Ansprüche 1 bis 20,
- **dadurch gekennzeichnet, dass**
- die Gehäuseeinrichtung als Moduleinheit ausgebildet ist und/oder als aus Modulelementen montierbare Einrichtung ausgebildet ist.

23. Einstellvorrichtung nach Anspruch 22,
- **dadurch gekennzeichnet, dass**
- die Modulelemente als gekantete Blechelemente ausgebildet sind.

24. Einstellvorrichtung nach Anspruch 22,
- **dadurch gekennzeichnet, dass**
- die Modulelemente Rahmenelemente und Flächenelemente umfassen.

25. Einstellvorrichtung nach Anspruch 21,
- **dadurch gekennzeichnet, dass**
- die Gehäuseeinrichtung als geschweißte Konstruktion ausgebildet ist.

26. Einstellvorrichtung nach einem oder mehreren der vorstehenden Ansprüche,
- **dadurch gekennzeichnet, dass**
- die Gehäuseeinrichtung Anschlusselemente zum Anschluss benachbarter Gehäusevorrichtungen aufweist, so dass eine modulare Anordnung mehrerer Gehäuseeinrichtungen möglich ist.

27. Einstellvorrichtung nach einem oder mehreren der Ansprüche 1 bis 20, 22 bis 26,
- **dadurch gekennzeichnet, dass**
- die Gehäuseeinrichtung (20.7) in Längsrichtung teleskopierbar ausgebildet ist.
